Europäisches Patentamt

(19) European Patent Office

Office européen des brevets

(11) Numéro de publication : **0 297 965 B1**

(12) **FASCICULE DE BREVET EUROPEEN**

(45) Date de publication du fascicule du brevet :
28.08.91 Bulletin 91/35

(21) Numéro de dépôt : **88401628.8**

(22) Date de dépôt : **27.06.88**

(51) Int. Cl.⁵ : $G01B\ 7/16$

(54) **Dispositif et méthode de mesure des déformations d'un échantillon.**

(30) Priorité : 30.06.87 FR 8709263

(43) Date de publication de la demande :
04.01.89 Bulletin 89/01

(45) Mention de la délivrance du brevet :
28.08.91 Bulletin 91/35

(84) Etats contractants désignés :
DE FR GB IT NL

(56) Documents cités :
US-A- 2 922 146
US-A- 4 587 739

(73) Titulaire : **INSTITUT FRANCAIS DU PETROLE**
**4, Avenue de Bois-Préau**
**F-92502 Rueil-Malmaison (FR)**

(72) Inventeur : **Lessi, Jacques**
**13bis, rue du Puits**
**F-78580 Maule (FR)**
Inventeur : **Perreau, Philippe**
**60, rue Pierre Brossolette**
**F-92500 Rueil Malmaison (FR)**
Inventeur : **Bary, Daniel**
**11, rue Félix Faure**
**F-92500 Rueil Malmaison (FR)**
Inventeur : **Grard, Guy**
**82, rue Pasteur**
**F-95100 Argenteuil (FR)**

## Description

La présente invention concerne un appareillage et une méthode de mesure dans plusieurs directions, des déformations de carottes prélevées dans des formations géologiques, les déformations résultant notamment du relâchement des contraintes qui s'exerçaient sur cette carotte avant son prélèvement.

La présente invention permet notamment la détermination des tenseurs des contraintes et/ou des déformations et en particulier de la direction de la contrainte horizontale minimum de compression. La connaissance de cette contrainte horizontale minimum de compression, appliquée à la production minière, pétrolière, ou gazière, notamment dans des formations à faible perméabilité, permet de définir le plan de propagation des fractures hydrauliques qui lui est perpendiculaire.

En réalisant par exemple la détermination de cette contrainte sur plusieurs carottes prélevées en différents lieux d'une formation géologique il est possible de déterminer l'emplacement optimum des forages en vue de l'amélioration de la production d'un champ en développement.

On entend par perméabilité, la propriété des espaces intérieurs d'une roche de communiquer entre eux, ce qui permet aux fluides qu'ils contiennent de se mouvoir à travers la roche en question.

Une manière connue de connaître l'état des contraintes et/ou des déformations et/ou plus particulièrement ce plan de propagation consiste à prélever une carotte de roche de la formation géologique concernée et à mesurer sur cette carotte les déformations résultant du relâchement quasi instantané des contraintes in situ.

Une fois que la carotte est extraite de la formation, celle-ci subit d'abord des déformations instantanées et importantes qui ne sont accessibles à la mesure que si cette dernière est effectuée au fond de puits juste au moment du carottage.

A ces déformations instantanées succèdent, pendant plusieurs dizaines d'heures, des déformations différées dont l'ordre de grandeur est plus faible que celui des déformations instantanées, et que l'on peut par exemple observer une fois la carotte remontée à la surface du sol, comme cela peut être le cas dans des forages pétroliers.

Une méthode, dite de relâchement, consiste à mesurer, dans plusieurs directions, les déformations différées d'une carotte, d'en déduire l'ensemble des déformations et leur évolution dans le temps, et par suite de connaître les contraintes auxquelles la formation considérée est assujettie.

Si, par facilité, on opère ces mesures sur des carottes cylindriques et que l'on considère l'axe de la carotte comme l'une des directions principales de déformation (hypothèse simplificatrice, justifiée lorsque les carottes sont prélevées dans des puits verticaux ou réalisées perpendiculairement à la stratification), il suffit de quatre directions indépendantes (une parallèle à l'axe de la carotte et trois dans un plan perpendiculaire à cet axe) pour déterminer avec un modèle rhéologique, tel ceux présentés par Blanton et Warpinsky, les déformations d'une carotte, leur évolution dans le temps et les contraintes de la formation étudiée.

Cependant, en raison notamment de la très faible valeur des déformations mesurées (quelques micromètres), ainsi que le plus souvent des conditions opératoires pour l'obtention de celles-ci (vibrations de chantier, du vent,... produisant des mouvements parasites) et aussi du dispositif permettant d'acquérir ces mesures, les mesures des déformations comme les déductions faites à partir de celles-ci sont erronées.

Si les mouvements parasites de l'échantillon nuisent à la mesure correcte des déformations de l'échantillon, d'autres phénomènes parasites peuvent masquer complètement les déformations induites par le relâchement des contraintes. Ces phénomènes sont notamment les variations de température même très faibles de la carotte et/ou du montage et les variations de saturation en fluide de la carotte.

Aussi, pour remédier notamment à ces derniers inconvénients, la présente invention propose un dispositif de mesure des déformations d'un échantillon, lesdites déformations résultant notamment du relâchement des contraintes auxquelles l'échantillon était préalablement soumis. Ce dispositif se caractérise notamment en ce qu'il comporte une cellule à l'intérieur de laquelle se trouve l'échantillon, et en ce que ladite cellule contient une masse thermique dont la capacité calorifique et/ou la conductibilité thermique sont notablement supérieures à celles de l'air dans les conditions normales de température et de pression.

L'échantillon étant un solide imprégné par au moins un fluide, la masse thermique pourra être choisie de manière à ce que la concentration en fluide d'imprégnation dans l'échantillon ne soit pas sensiblement modifiée.

La masse thermique pourra être choisie de manière à ne pas s'introduire dans l'échantillon.

L'échantillon pourra comporter une pellicule externe et la pellicule pourra être adaptée à empêcher l'introduction de la masse thermique dans l'échantillon.

L'échantillon étant un solide imprégné par au moins un fluide, l'échantillon pourra comporter une pellicule externe et la pellicule pourra être adaptée à empêcher la modification de la concentration en fluide d'imprégnation dans l'échantillon.

La masse thermique pourra être un liquide.

La masse thermique pourra être un liquide choisi dans le groupe, eau, huile paraffinique et mercure.

Le dispositif pourra comporter des moyens de régulation de la température de la masse thermique notamment à proximité de l'échantillon.

Le dispositif pourra comporter au moins deux capteurs de température, le premier des deux capteurs de température étant situé à une première distance de l'échantillon inférieure à une deuxième distance de l'échantillon où se trouve le deuxième capteur de température et le dispositif pourra comporter des moyens de comparaison des températures indiquées par les deux capteurs.

Le dispositif pourra comporter des moyens de régulation de la température de la masse thermique notamment à proximité de l'échantillon et les moyens de comparaison pourront être adaptés à commander les moyens de régulation.

Les capteurs étant montés sur des supports, les supports pourront être disposés à l'extérieur de la cellule.

La présente invention concerne en outre une méthode de mesure de déformations d'un échantillon utilisant le dispositif comportant au moins deux capteurs de température, le premier des deux capteurs de température étant situé à une première distance de l'échantillon inférieure à une deuxième distance de l'échantillon où se trouve le deuxième capteur de température. Cette méthode est notamment caractérisée en ce qu'on détermine, au moyen des valeurs des températures relevées par les capteurs, un gradient thermique existant dans la masse thermique.

On pourra évaluer la répartition des températures dans l'échantillon à partir du gradient thermique et de son évolution dans le temps.

On pourra commander en fonction du gradient thermique, des moyens de régulation de la température de la masse thermique notamment à proximité de l'échantillon.

On pourra déterminer l'espace de temps pendant lequel la répartition des températures dans l'échantillon est sensiblement uniforme.

Le dispositif ou la méthode pourront être utilisés pour la détermination des déformations d'un échantillon géologique, tel une carotte prélevée dans un forage du sol.

L'invention pourra être bien comprise et tous ses avantages apparaîtront clairement à la lecture de la description qui suit, dont un exemple de réalisation est illustré par les figures annexées parmi lesquelles:

— la figure 1 représente en coupe le dispositif selon l'invention,

— la figure 2 est une vue de dessus du dispositif selon l'invention illustré à la figure 1, et

— la figure 3 représente en coupe une variante du dispositif selon l'invention.

La référence 1 est relative à l'échantillon, tel une carotte géologique, dont les déformations dues au relâchement des contraintes doivent être mesurées. L'échantillon 1 est maintenu par des moyens 2 de centrage sur une table 3, de manière que cet échantillon ait le moins de mouvements possibles relativement aux supports 4 de capteur de déplacement ou aux capteurs de déplacement 7.

En effet, notamment dans les chantiers miniers, les conditions pour effectuer de telles mesures sont relativement sévères et bien que l'échantillon soit maintenu sensiblement fixe, il subsiste toujours la possibilité de micro-mouvements parasites de l'échantillon qu'il est nécessaire de réduire.

Le capteur de déplacement 7 est fixé au support 4 qui peut se déplacer par rapport à la table 3 au moyen d'une vis d'approche 8 ou de réglage grossier et (au moyen) d'une vis micrométrique 6.

Dans le cas de l'exemple de réalisation objet de la présente description, l'échantillon est une carotte minière et possède une forme cylindrique de révolution. L'axe 11 de cette forme cylindrique correspond à une direction de déformation principale connue dans l'art de la mécanique des solides.

L'axe 11 de l'échantillon 1 est placé perpendiculairement au plan de la table 3. Le dispositif comporte six capteurs de déplacement horizontaux 7, P, $P_1$, Q, $Q_1$, R, $R_1$ ayant une direction de mesure concourante avec l'axe 11, et perpendiculaire à cet axe 11 de l'échantillon 1. Le dispositif comporte en outre un capteur de déplacement vertical V monté sur une console 9 suivant un axe de mesure parallèle à l'axe 11 de l'échantillon 1.

Les six plus un capteurs de déplacement pourront être des capteurs à induction fonctionnant sous un courant de 5KHz et pourront avoir une résolution de 0,01 micromètre.

Les six capteurs horizontaux sont associés par couple (P, $P_1$), (Q, $Q_1$), (R, $R_1$), de manière que les directions des capteurs soient sensiblement comprises dans un plan axial de l'échantillon et soient diamétralement opposées entre elles par rapport à l'échantillon. Les trois couples de directions ainsi formés définissent avec l'axe 11 de l'échantillon trois plans axiaux de mesure. Ces plans axiaux sont disposés l'un relativement à l'autre avec un angle sensiblement égal à 120 degrés. Les axes des six capteurs 7 horizontaux sont situés dans le même plan perpendiculaire à l'axe de l'échantillon.

En réalisant des couples de directions de mesure, il est très facile de détecter et d'évaluer les légers mouvements accidentels de l'échantillon 1 relativement à la table 3.

Par cette disposition des directions de mesures des capteurs horizontaux, ou axes de ces capteurs, chaque couple de direction est coaxial à un axe d'analyse suivant lequel les déformations de l'échantillon sont faciles à obtenir avec une bonne précision, à partir de la somme algébrique des valeurs de déplacements mesurées suivant chacun des couples de directions.

Ainsi par la connaissance des déformations de l'échantillon suivant trois axes d'analyse, et par l'utilisation d'un modèle rhéologique, tel ceux présentés par Blanton et Warpinsky, il est possible de connaître le tenseur des déformations de l'échantillon, de suivre leur évolution dans le temps et par suite de déterminer le tenseur des contraintes initiales de l'échantillon, soit encore l'état des contraintes de la formation géologique d'où provient l'échantillon.

Bien que l'exemple de réalisation préféré et décrit comporte six capteurs 7 horizontaux, on pourra réduire à cinq le nombre de ces capteurs. En effet, sachant qu'il est nécessaire de posséder cinq mesures indépendantes pour résoudre le calcul des cinq inconnues (trois inconnues relatives aux déformations de l'échantillon, deux inconnues relatives aux déplacements de l'échantillon par rapport au dispositif de mesure des déformations de l'échantillon), il est possible de n'utiliser que cinq capteurs ayant des directions de mesures indépendantes.

Par directions de mesure indépendantes entre elles on entend les mesures effectuées suivant ces directions qui permettent la résolution du calcul mentionné précédemment. Un ensemble de telles directions est notamment donné par des directions concourantes à l'axe de l'échantillon et qui ne sont pas sensiblement comprises dans un même demi-plan délimité par l'axe de l'échantillon et défini par cet axe et le point de contact du capteur avec l'échantillon.

Afin de résoudre plus facilement le calcul des inconnues de mouvement horizontal, on pourra former au moins deux couples de directions de mesure indépendantes, de manière à connaître facilement les déformations selon l'axe d'analyse parallèle à ces couples de directions et compris dans le plan de ces couples de directions.

L'échantillon pourra avoir une autre forme que la forme préférée cylindrique de révolution. Aussi l'axe de l'échantillon sera défini comme étant un axe principal de déformation.

De préférence les directions horizontales de mesures sont situées dans un même plan perpendiculaire à l'axe principal de déformation de l'échantillon, mais on peut très bien placer ces directions dans des plans différents perpendiculaires audit axe.

Le dispositif de mesure des déformations comporte en outre une cellule 10 extérieure aux capteurs et à l'échantillon 1. Cette cellule 10 est remplie d'une masse thermique destinée à réduire les variations de température de l'échantillon et/ou du montage, et/ou à limiter les variations de saturation en fluide d'un échantillon imprégné de fluide.

Il est connu d'effectuer les mesures des déformations résultant du relâchement des contraintes dans l'air. Pour cela on place, par exemple, le dispositif de mesure dans une étuve dont la température est régulée à 25°C ± 0,1°C. Dans ce cas le choix de la température de régulation, qui est située au-dessus de la température ambiante, est établi pour que les pertes thermiques du dispositif soient toujours positives pendant la durée des mesures ou au cours des saisons de l'année. Ce type de moyens de régulation de la température ne comporte pas nécessairement de source froide.

Cependant, par exemple, lorsque l'échantillon est une carotte géologique, la surface de l'échantillon comme sa masse n'est le plus souvent pas, au moment où il va être placé dans le dispositif, à la température du dispositif. Il en résulte alors un certain délai pour que l'échantillon atteigne la température du dispositif de mesure et au-delà de laquelle les mesures sont valides.

Lorsque, par exemple, la masse thermique est de l'air régulé à 25°C et que l'échantillon est à une température de 10 ou 15°C, il est indispensable d'attendre plusieurs heures, voire dizaines d'heures, avant de pouvoir valider les mesures.

Cependant, la connaissance de l'évolution dans le temps des déformations, notamment le plus tôt possible après le carottage, ou dès le début du relâchement des contraintes, permet d'améliorer la qualité des interprétations des mesures.

Aussi, en remplaçant la masse thermique d'air par une masse thermique de volume suffisant ayant notamment une capacité calorifique et/ou une conductibilité thermique notablement supérieure à celle de l'air dans les conditions normales de températures et de pression, il est possible de réduire la durée de mise en température de l'échantillon et d'améliorer de ce fait la qualité des mesures et leur interprétation.

Des essais, utilisant un dispositif placé dans une étuve et une masse thermique liquide constituée d'huile de vaseline, ont montré qu'il fallait attendre seulement 160 minutes, après immersion de l'échantillon, initialement à une température voisine de 10°C, pour que celui-ci soit à la température du bain formé par la masse thermique.

Cette durée est estimée par l'observation en continu de la température du bain qui montre avant l'équilibre un refroidissement (correspondant à une mise en température de l'échantillon) et seulement une fois l'équilibre atteint, un réchauffage du bain produit par la source uniquement chaude des moyens de régulation.

Une fois que l'échantillon est à la température du bain, c'est-à-dire une fois que sa température est uniforme, il est possible de réaliser des corrections de déformations thermiques par la connaissance du coefficient de dilatation thermique. La valeur de ce coefficient peut être obtenue en faisant varier la température de l'échantillon une fois relaxé et en mesurant les déformations alors uniquement produites par la température. Sinon, au cours des mesures des déformations de relâchement, les déformations dues à la dilatation masqueraient les seules déformations résultant du relâchement.

Cette masse thermique d'inertie thermique améliorée, qui peut être constituée d'eau, d'huile, de mercure, d'un gel, d'une poudre..., permet en outre de stabiliser la température du dispositif qui lui aussi, bien que réalisé en matériau à faible coefficient de dilatation tel qu'en INVAR (marque déposée d'un alliage contenant 64% de fer, 36% de nickel et ayant un coefficient de dilatation, de $0,5.10^{-6}$ °C$^{-1}$), est suc-ceptible d'introduire des déformations thermiques parasites.

Outre pour ses qualités thermiques, la masse thermique utilisée peut être sélectionnée pour sa capacité à ne pas assécher, ni imprégner, l'échantillon mesuré. En effet, lorsque l'échantillon est solide, présente une certaine porosité, et est imprégné par un fluide, tel celui de la formation géologique d'où provient l'échantillon, les variations de concentration de fluide de l'échantillon, comme la pénétration par un autre fluide, produisent des modifications des contraintes internes, notamment au cours du relâchement. Les modifications des contraintes internes se traduisent par des modifications des déformations mesurées et donc par une altération des mesures de déformation.

Ainsi, en utilisant une masse thermique ni asséchante, ni imprégnante pour l'échantillon, les déformations relatives à ces effets s'annulent et aucune correction due à la variation concentration en fluide de l'échantillon n'est à effectuer.

Si la masse thermique risque d'assécher et/ou d'imprégner un échantillon préalablement imprégné de fluide, l'échantillon pourra comporter une pellicule externe d'imperméabilisation, adaptée à empêcher la modification de la concentration en fluide d'imprégnation et/ou l'introduction de la masse thermique dans l'échantillon.

Lorsque l'échantillon est une carotte géologique imprégnée d'eau et que la masse thermique comporte de l'eau, l'échantillon pourra comporter une pellicule adaptée à empêcher l'éventuelle migration d'un sel présent dans l'échantillon.

Une autre manière pour déterminer la validité des mesures de déformation d'un échantillon consiste à utiliser deux capteurs de température. Le premier de ces deux capteurs est situé à une première distance de l'échantillon inférieure à une deuxième distance de l'échantillon où se trouve le deuxième capteur de température.

Par exemple, le premier capteur peut être placé sur l'échantillon et le deuxième capteur à 1 ou 2 cm de l'échantillon dans la masse thermique. Par cette disposition des capteurs et au moyen des valeurs de températures relevées par ces capteurs, on peut alors déterminer par exemple avec des moyens de comparaison, un gradient thermique existant dans la masse thermique et par conséquent l'instant où l'équilibre thermique est atteint et où les mesures de déformations sont valides (à partir de cet instant la température de l'échantillon est connue).

Pendant les mesures des déformations, de légères variations de température de consigne de la cellule, qui introduisent des perturbations dans les mesures de déformations, peuvent être alors corrigées si l'on établit des relations entre déformations et température en effectuant un étalonnage de l'ensemble montage et échantillon. Cet étalonnage peut être obtenu, en imposant une variation de température en fin d'essai, lorsque les déformations résultant du relâchement des contraintes sont devenues négligeables.

Pour mieux évaluer la répartition des températures dans l'échantillon, on pourra éviter de produire des mouvements de la masse thermique.

On pourra commander en fonction de ce gradient thermique des moyens de régulation de la température de la masse thermique, tels une source froide et/ou une source chaude, cette régulation ayant ses effets notamment à proximité de l'échantillon.

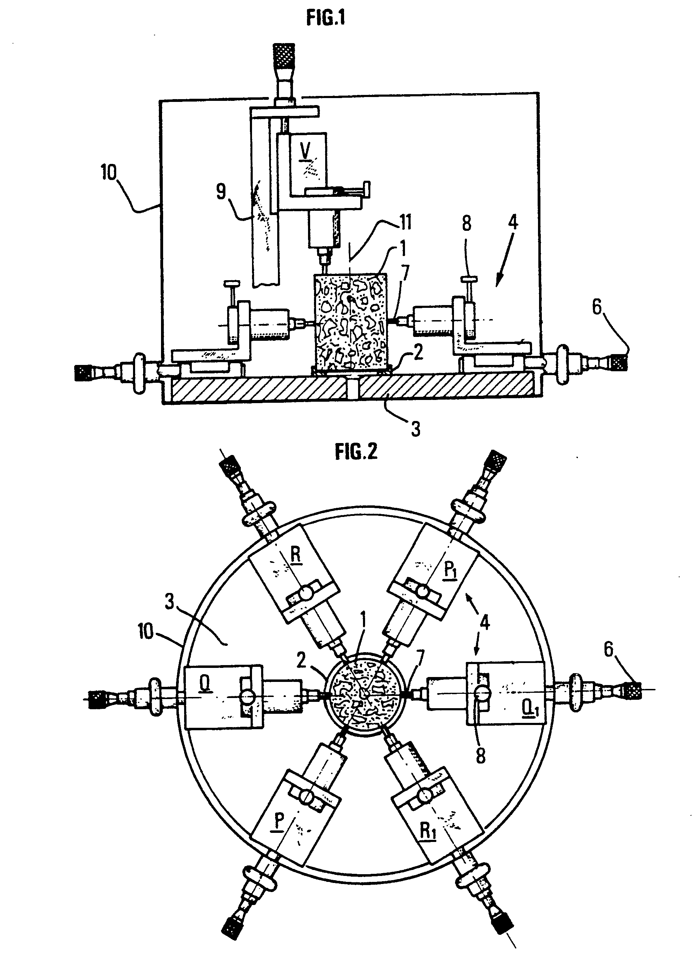

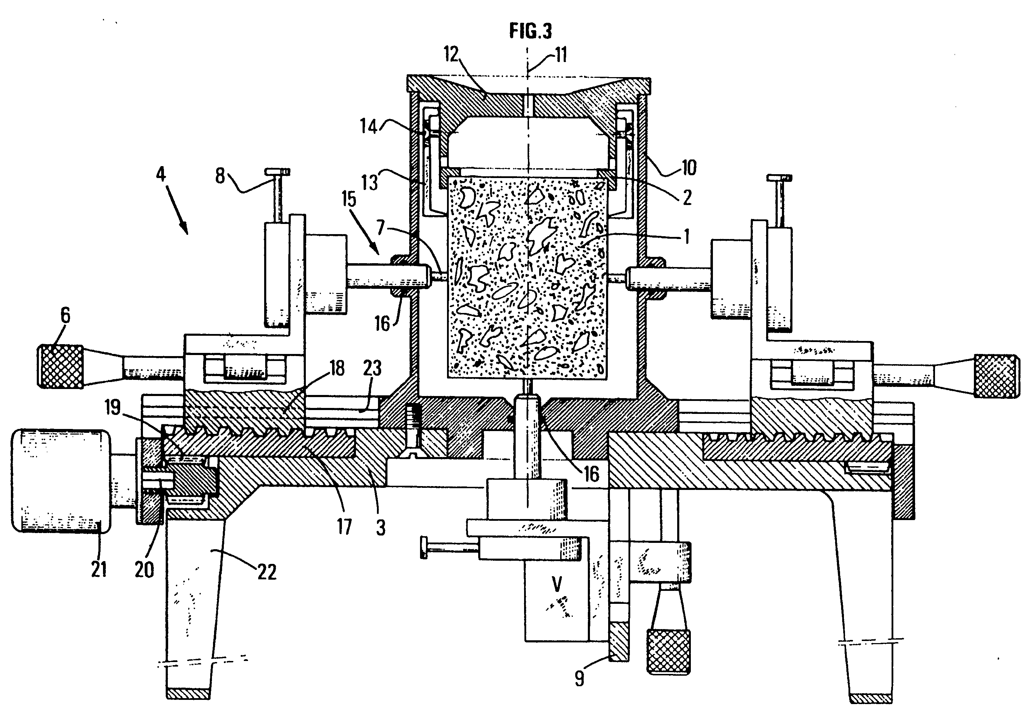

La figure 3 représente une variante du dispositif de mesure selon l'invention sur laquelle sont reportées les références numériques relatives aux mêmes éléments que ceux des figures 1 et 2.

Selon cette variante, les supports 4 des capteurs horizontaux de déplacement 7, les vis d'approche 8 et micrométrique 6 sont disposés à l'extérieur de la cellule 10. L'échantillon est centré dans la cellule 10 par des moyens 2 fixés à un couvercle 12 de la cellule. L'échantillon est maintenu au couvercle 12 par des griffes 13 serrées par des vis 14.

Les capteurs horizontaux 7 pénètrent la paroi cylindrique de la cellule par des orifices circulaires 15 dont les bords sont pourvus de moyens d'étanchéité 16 coopérant avec la touche de six capteurs 7 pour empêcher le fluide se trouvant dans la cellule 10 de la quitter.

Les six supports 4 des capteurs horizontaux 7 sont montés dans des glissières 23 de la table 3 et synchronisés en translation par des moyens permettant une approche rapide et égale des capteurs de manière à ce qu'ils atteignent quasi simultanément leur position de mesure, et ainsi de réduire le temps de réglage de la position des capteurs une fois que l'échantillon 1 est placé dans la cellule 10, le diamètre des échantillons pouvant fortement varier de l'un à l'autre.

Ces moyens synchrones d'avancement en translation des capteurs 7 comportent par exemple une couronne 17, tournant autour de l'axe 11. Cette couronne 17 comporte sur sa face supérieure une spirale qui coopère avec une forme localement complémentaire 18 solidaire de chacun des supports 4 de capteur 7 pour obtenir une translation des supports, et sur sa face inférieure, une denture 19 périphérique qui coopère avec un pignon 20 mû par un moteur électrique 21 pour réaliser la rotation de la couronne dans un sens ou le sens opposé et ainsi l'avancement ou le recul des capteurs 7.

Contrairement au dispositif illustré aux figures 1 et 2, le capteur vertical de déplacement V, la console 9 et la vis d'approche associée sont disposés en dessous de la table 3 de manière que la touche du capteur vertical V appuie sur la face inférieure de l'échantillon sensiblement suivant l'axe de celui-ci.

Des moyens d'étanchéité 16 empêchent le fluide réalisant la masse thermique de s'échapper par l'espace annulaire séparant la table 3 du capteur vertical V.

Le dispositif comporte en outre des pieds 22 permettant de l'asseoir sur un espace de mesure.

Ce mode de réalisation est particulièrement bien adapté à l'utilisation de mercure comme masse thermique. La conductibilité thermique du mercure étant relativement très élevée, par exemple par rapport à celle de l'eau ou de l'huile, la durée nécessaire à la mise en température de l'échantillon est par suite diminuée. Des moyens de chauffage adaptés permettent d'obtenir un rapide équilibre des températures de l'échantillon. Le mercure offre aussi l'avantage de ne pas assécher, ni imprégner bon nombre d'échantillon de roche et ainsi n'oblige pas une imperméabilisation de ceux-ci, ce qui permet une mesure quasiment non différée.

De plus, l'agencement des capteurs et de la cellule permet un placement rapide de l'échantillon et des capteurs et ainsi une obtention rapide des mesures. En outre, le fluide réalisant la masse thermique peut rester dans la cellule entre la mesure de plusieurs échantillons consécutifs ce qui évite des manipulations et accroit la sécurité de la mise en place notamment avec des fluides tels que le mercure qui nécessite des précautions particulières.

## Revendications

1. Dispositif de mesure des déformations d'un échantillon (1), lesdites déformations résultant notamment du relâchement des contraintes auxquelles l'échantillon (1) était préalablement soumis, caractérisé en ce qu'il comporte une cellule (10) à l'intérieur de laquelle se trouve l'échantillon (1), et en ce que ladite cellule (10) contient une masse thermique dont la capacité calorifique et/ou la conductibilité thermique sont notablement supérieures à celles de l'air dans les conditions normales de température et de pression.

2. Dispositif selon la revendication 1 dans lequel l'échantillon (1) est un solide imprégné par au moins un fluide, caractérisé en ce que la masse thermique est choisie de manière à ce que la concentration en fluide d'imprégnation dans l'échantillon (1) ne soit pas sensiblement modifiée au cours de la mesure des déformations.

3. Dispositif selon l'une des revendications 1 et 2, caractérisé en ce que ladite masse thermique est choisie de manière à ne pas s'introduire dans l'échantillon (1).

4. Dispositif selon l'une des revendications 1 à 3, caractérisé en ce que l'échantillon (1) comporte une pellicule externe et en ce que la pellicule est adaptée à empêcher l'introduction de la masse thermique dans l'échantillon (1).

5. Dispositif selon l'une des revendications 1 à 4 dans lequel l'échantillon (1) est un solide imprégné par au moins un fluide, caractérisé en ce que l'échantillon (1) comporte une pellicule externe et en ce que la pellicule est adaptée a empêcher la modification de la concentration en fluide d'imprégnation dans l'échantillon (1).

6. Dispositif selon l'une des revendications 1 à 5, caractérisé en ce que la masse thermique est un liquide.

7. Dispositif selon l'une des revendications 1 à 6, caractérisé en ce que la masse thermique est un liquide choisi dans le groupe, eau, huile paraffinique et mercure.

8. Dispositif selon l'une des revendications 1 à 7, caractérisé en ce qu'il comporte des moyens de régulation de la température de la masse thermique.

9. Dispositif selon l'une des revendications 1 à 8, caractérisé en ce qu'il comporte au moins deux capteurs de température, le premier des deux capteurs de température étant situé à une première distance de l'échantillon (1) inférieure à une deuxième distance de l'échantillon (1) où se trouve le deuxième capteur de température et en ce qu'il comporte des moyens de comparaison des températures indiquées par les deux capteurs.

10. Dispositif selon la revendication 9, caractérisé en ce qu'il comporte des moyens de régulation de la température de la masse thermique et en ce que les moyens de comparaison sont adaptés à commander les moyens de régulation.

11. Dispositif selon l'une des revendications 1 à 10, caractérisé en ce que des capteurs (7) sont montés sur des supports (4) et en ce que lesdits supports sont disposés à l'extérieur de ladite cellule (10) (Fig. 3).

12. Méthode de mise en oeuvre du dispositif selon les revendications 1 à 11, caractérisée en ce qu'elle utilise deux capteurs de température, le premier des deux capteurs de température étant situé à une première distance de l'échantillon (1) inférieure à une deuxième distance de l'échantillon (1) où se trouve le deuxième capteur de température, et en ce que la cellule (10) contient une masse thermique dont la capacité calorifique et/ou la conductibilité thermique sont notablement supérieures a celles de l'air dans les conditions normales de température et de pression, et en ce que l'on détermine, au moyen des valeurs de températures relevées par les capteurs, un gradient thermique existant dans ladite masse thermique.

13. Méthode selon la revendication 12, caractérisée en ce qu'on évalue la répartition des températures dans l'échantillon (1) à partir du gradient thermique et de son évolution dans le temps.

14. Méthode selon l'une des revendications 12 à 13, caractérisée en ce qu'on commande en fonction du gradient thermique, des moyens de régulation de la température de la masse thermique.

15. Méthode selon l'une des revendications 12 à 14, caractérisée en ce qu'on détermine l'espace de temps pendant lequel la répartition des températures dans l'échantillon (1) est sensiblement uniforme.

16. Application du dispositif selon l'une des revendications 1 à 11 ou de la méthode selon l'une des revendications 12 à 15 à la détermination de déformations d'un échantillon géologique, tel une carotte prélevée dans un forage du sol.

**Patentansprüche**

1. Gerät zur Messung der Deformationen einer Probe (1), wobei diese Deformationen insbesondere aus dem Nachlassen der Beanspruchungen, denen die Probe (1) vorher ausgesetzt war, resultieren, dadurch **gekennzeichnet**, daß es eine Zelle (10) umfaßt, in deren Innerem sich eine Probe (1) befindet und daß diese Zelle (10) eine thermische Masse enthält, deren Wärmekapazität und/oder Wärmeleitfähigkeit insbesondere höher als die der Luft unter normalen Bedingungen von Temperatur und Druck sind.

2. Gerät nach Anspruch 1, wobei die Probe (1) ein mit wenigstens einem Fluid imprägnierter Festkörper ist, dadurch **gekennzeichnet**, daß die thermische Masse derart gewählt wird, daß die Konzentration an Imprägnierungsfluid in der Probe (1) während der Messung der Deformationen nicht wesentlich modifiziert wird.

3. Gerät nach einem der Ansprüche 1 und 2, dadurch **gekennzeichnet**, daß die thermische Masse derart gewählt wird, daß sie in die Probe (1) nicht eintritt.

4. Gerät nach einem der Ansprüche 1 bis 3, dadurch **gekennzeichnet**, daß die Probe (1) einen äußeren Film umfaßt und daß der Film so ausgelegt ist, daß er verhindert, daß die thermische Masse in die Probe (1) eingeführt wird.

5. Gerät nach einem der Ansprüche 1 bis 4, wobei die Probe (1) ein mit wenigstens einem Fluid imprägnierter Festkörper ist, dadurch **gekennzeichnet**, daß die Probe (1) einen äußeren Film umfaßt und daß der Film so ausgelegt ist, daß er die Modifikation der Imprägnierungsfluidkonzentration in der Probe (1) verhindert.

6. Gerät nach einem der Ansprüche 1 bis 5, dadurch **gekennzeichnet**, daß die thermische Masse eine Flüssigkeit ist.

7. Gerät nach einem der Ansprüche 1 bis 6, dadurch **gekennzeichnet**, daß die thermische Masse eine Flüssigkeit ist, die gewählt ist aus der Gruppe Wasser, Paraffin, Öl und Quecksilber.

8. Gerät nach einem der Ansprüche 1 bis 7, dadurch **gekennzeichnet**, daß es Mittel zum Steuern der Temperatur und der thermischen Masse umfaßt.

9. Gerät nach einem der Ansprüche 1 bis 8, dadurch **gekennzeichnet**, daß es wenigstens zwei Temperaturfühler umfaßt, wobei der erste der beiden Temperaturfühler unter einer ersten Entfernung von der Probe (1) sich befindet, die geringer als eine zweite Entfernung von der Probe (1), wo sich der zweite Temperaturfühler befindet, ist und daß es Mittel zum Vergleich der durch die beiden Fühler angezeigten Temperaturen umfaßt.

10. Gerät nach Anspruch 9, dadurch **gekennzeichnet**, daß es Einstellmittel für die Temperatur der thermischen Masse umfaßt und daß die Vergleichermittel so ausgelegt sind, daß sie die Einstellmittel steuern.

11. Gerät nach einem der Ansprüche 1 bis 10, dadurch **gekennzeichnet**, daß Fühler bzw. Aufnehmer (7) auf Trägern (4) angebracht sind und daß diese Träger außerhalb dieser Zelle (10) (Fig. 3) angeordnet sind.

12. Verfahren zur Verwirklichung des Geräts nach den Ansprüchen 1 bis 11, dadurch **gekennzeichnet**, daß es zwei Temperaturfühler bzw. -aufnehmer verwendet, wobei der erste der beiden Temperaturfühler unter einem ersten Abstand zur Probe (1), der geringer als ein zweiter Abstand zur Probe (1), ist, wo sich der zweite Temperaturfühler befindet, angeordnet ist, und daß die Zelle (10) eine thermische Masse enthält, deren Wärmekapazität und/oder Wärmeleitvermögen insbesondere höher als die der Luft unter den normalen Bedingungen von Temperatur und Druck sind und daß man vermittels der durch die Fühler genommenen Temperaturwerte einen in der thermischen Masse existierenden Wärmegradienten bestimmt.

13. Verfahren nach Anspruch 12, dadurch **gekennzeichnet**, daß man die Verteilung der Temperaturen in der Probe (1), ausgehend vom Wärmegradienten und seiner Entwicklung, über die Zeit bewertet.

14. Verfahren nach einem der Ansprüche 12 bis 13, dadurch **gekennzeichnet**, daß man als Funktion des Wärmegradienten Mittel zum Einstellen der Temperatur der thermischen Masse steuert.

15. Verfahren nach einem der Ansprüche 12 bis 14, dadurch **gekennzeichnet**, daß man den Zeitraum bestimmt, währenddessen die Verteilung der Temperaturen in der Probe (1) im wesentlichen gleichförmig ist.

16. Anwendung des Geräts nach einem der Ansprüche 1 bis 11 oder des Verfahrens nach einem

13      EP 0 297 965 B1      14

der Ansprüche 12 bis 15 auf die Bestimmung von Deformationen einer geologischen Probe wie eines in einer Erdbodenbohrung entnommenen Bohrkerns.

## Claims

1. Device for measuring the deformations of a sample (1), the said deformations resulting, in particular, from the relaxation of the stresses to which the sample (1) was previously subjected, characterised in that it comprises a cell (10) inside which the sample (1) is placed, and in that the said cell (10) contains a thermal mass, its calorific capacity and/or the thermal conductivity being considerably greater than that of air under normal temperature conditions and pressure.

2. Device in accordance with claim 1 in which the sample (1) is a solid impregnated with at least a fluid, characterised in that the thermal mass is chosen so that the concentration of impregnation fluid in the sample (1) is not basically modified when measuring the deformations.

3. Device in accordance with one of claims 1 and 2, characterised in that the said thermal mass is chosen so that it is not introduced into the sample (1).

4. Device in accordance with one of claims 1 to 3, characterised in that the sample (1) comprises an external film and in that the film is designed to prevent the introduction of the thermal mass into the sample (1).

5. Device in accordance with one of claims 1 to 4 in which the sample (1) is a solid impregnated with at least a fluid, characterised in that the sample (1) comprises an external film and in that the film is designed to prevent modification of the concentration of impregnation fluid in the sample (1).

6. Device in accordance with one of claims 1 to 5, characterised in that the thermal mass is a liquid.

7. Device in accordance with one of claims 1 to 6, characterised in that the thermal mass is a liquid chosen from within the group, water, paraffin oil and mercury.

8. Device in accordance with claim 1 to 7, characterised in that it comprises a means of regulating the temperature of the thermal mass.

9. Device in accordance with one of claims 1 to 8, characterised in that it comprises at least two temperature sensors, the first of the two temperature sensors being positioned at a first distance from the sample (1) which is less than a second distance from the sample (1) where the second temperature sensor is positioned and in that it comprises a means of comparison for the temperatures indicated by the two sensors.

10. Device in accordance with claim 9, characterised in that it comprises a means of regulating the temperature of the thermal mass and in that the means of comparison is designed to control the means of regulation.

11. Device in accordance with one of claims 1 to 10, characterised in that the sensors (7) are mounted on supports (4) and in that the said supports are located outside the said cell (10) (Figure 3).

12. Method of applying the device in accordance with claims 1 to 11, characterised in that it uses two temperature sensors, the first of the two temperature sensors being positioned at a first distance from the sample (1) which is less than a second distance from the sample (1) where the second temperature sensor is positioned and in that the cell (10) contains a thermal mass, its calorific capacity and/or the thermal conductivity being considerably greater than that of air under normal temperature conditions and pressure and in that, in accordance with the values of the temperatures recorded by the sensors, the thermal gradient existing in the said thermal mass is determined.

13. Method in accordance with claim 12, characterised in that the distribution of temperatures in the sample (1) is determined from the thermal gradient and its development over a period of time.

14. Method in accordance with one of claims 12 to 13, characterised in that, in accordance with the thermal gradient, the means of regulating the temperature of the thermal mass is controlled.

15. Method in accordance with one of claims 12 to 14, characterised in that the period of time is determined during which the distribution of temperatures in the sample (1) is basically uniform.

16. Application of the device in accordance with one of claims 1 to 11, or the method in accordance with one of claims 12 to 15, to the determination of the deformations of a geological sample, such as a core sample taken from a bore hole.

8

**FIG.1**

**FIG.2**

FIG.3